# EUROPÄISCHE PATENTSCHRIFT

(11) **EP 2 166 254 B1**
(45) Veröffentlichungstag und Bekanntmachung des Hinweises auf die Patenterteilung: **16.03.2011**
(21) Anmeldenummer: 09011704.5
(22) Anmeldetag: 14.09.2009
(51) Int. Cl.: F16H 47/08, B60K 6/12, F16H 37/08

(54) **Antriebsstrang in einem Fahrzeug**
Power train in a vehicle
Train d'entraînement dans un véhicule

(30) Priorität: 18.09.2008 DE 102008047991
(43) Veröffentlichungstag der Anmeldung: 24.03.2010
(73) Patentinhaber: Voith Patent GmbH, 89522 Heidenheim (DE)
(72) Erfinder: Discher, Andreas, 89542 Herbrechtingen (DE); Grözinger, Thomas, 89555 Steinheim (DE); Bartosch, Stephan, 89192 Rammingen (DE)
(74) Vertreter: Schmidt, Sven Hendrik

(56) Entgegenhaltungen:
- EP-A2- 1 538 739
- DE-A1-102006 043 227
- US-A- 5 557 977

## Beschreibung

Die Erfindung betrifft einen Antriebsstrang in einem Fahrzeug mit den im Oberbegriff von Anspruch 1 aufgeführten Merkmalen, wie ans DE 102006 04 3227A1 bekannt.

Antriebsstränge In Fahrzeugen, beispielsweise schienengebundenen oder schienenlosen Kraftfahrzeugen, jedoch auch in Wasserfahrzeugen und Luftfahrzeugen, sind aus dem allgemeinen Stand der Technik bekannt. Bei derartigen Antrlebssträngen ist zumeist ein Verbrennungsmotor als wichtigstes Aggregat zur Bereitstellung der Leistung bekannt, Typischerweise wird die Leistung des Verbrennungsmotors dann über eine Getriebeeinheit, insbesondere ein Gangwechselgetriebe, welches verschiedene Drehzahlen und Drehmomente an seinem Ausgang erlaubt, zumindest mittelbar auf den eigentlichen Abtrieb des Antriebsstrangs, beispielsweise eln Rad, einen Propeller oder eine Schiffsschraube, übertragen. Zusätzlich zu dieser primären Funktionalität des Antriebsstrangs weisen derartige Antriebsstränge im Allgemeinen ein oder mehrere Hilfsaggregate auf, welche typischerweise über Nebenabtriebe entweder des Verbrennungsmotors oder des Getriebes angetrieben werden. Beispiele für solche Hilfsaggregate können dabei ein Generator beziehungsweise eine Lichtmaschine, eine Pumpe zur Förderung eines Fluids, beispielsweise eine Kühlwasserpumpe oder die Pumpe zur Förderung eines Steuerdrucks für eln beispielsweise hydrodynamisch betriebenes Getriebe sein. Daneben sind aus derartigen Antriebssträngen auch weitere andersartige Hilfsaggregate bekannt und üblich, beispielsweise Lüfter für Kühleinrichtungen oder verschleißfreie Dauerbremsen wie beispielsweise Retarder auf der Basis von Wasser oder Öl.

Üblicherweise werden die Leistungen für derartige Hilfsantrlebe an vorhandenen Nebenabtrieben des Verbrennungsmotors oder des Getriebes abgegriffen. Diese Nebenabtriebe sind dabei für den Antriebsstrang selbst von untergeordneter Bedeutung. Auf diese wird daher keine weitere Rücksicht genommen, sondern die Hilfsaggregate müssen so an die Nebenabtriebe angepasst werden, dass diese ihre Funktion erfüllen können. Beispielsweise wird eine Ölpumpe oder eine Kühlwasserpumpe als Hilfsaggregat typischerweise direkt an einen Nebenabtrieb des Verbrennungsmotors, beispielsweise auf der dem eigentlichen Motorausgang gegenüberliegenden Seite der Kurbelwelle über entsprechende Antriebselemente, wie beispielsweise Zahnriemen oder Kellrlemen angebracht. Das Hilfsaggregat wird damit von dem Nebenabtrieb mit einer festen Übersetzung angetrieben. Es muss also so ausgelegt sein, dass es bereits bei geringen Drehzahlen des Verbrennungsmotors die Anforderungen erfüllt. Mit steigender Drehzahl wird auch die Drehzahl des Hilfsaggregates entsprechend ansteigen, so dass dieses entsprechend überdimensioniert werden muss, um bei geringen Drehzahlen die Erfordernisse bereits zu erfüllen. Dies führt im Allgemeinen dazu, dass bei höheren Drehzahlen die Erfordernisse entsprechend übererfüllt sind, und dass das Hilfsaggregat größer gebaut werden muss, als es eigentlich notwendig wäre. Damit geht neben dem höheren Bedarf an Bauraum und Kosten dann typischerweise auch ein höherer Leistungsbedarf einher.

Eine Alternative hierzu bildet der Antrieb von elektrischen Hilfsaggregaten, welche über eine Lichtmaschine beziehungsweise einen Generator angetrieben werden. Auch dieser Generator ist als Hilfsaggregat an einem Nebenabtrieb des Antriebsstrangs angeordnet. Er bletet gegenüber mechanischen oder strömungstechnischen Hilfsaggregaten jedoch den Vorteil, dass die von ihm erzeugte elektrische Leistung über einen entsprechenden Umrichter so gewandelt werden kann, dass unabhängig von der Drehzahl die benötigten elektrischen Kenngrößen bereitgestellt werden können. Dies erfordert jedoch einen entsprechenden Aufwand hinsichtlich der Leistungselektronik, welcher insbesondere bei höheren Leistungen einen entscheidenden Nachteil darstellt.

Es ist daher die Aufgabe der vorliegenden Erfindung, einen Antriebsstrang gemäß dem Oberbegriff von Anspruch 1 zu schaffen, welcher die oben genannten Nachteile vermeidet und eine einfache und effiziente Möglichkeit bereitstellt, hinsichtlich ihrer Größe und ihres Leistungsbedarfs optimierte Hilfsaggregate anzutreiben.

Erfindungsgemäß wird diese Aufgabe durch die im kennzeichnenden Teil von Anspruch 1 genannten Merkmale gelöst.

Der erfindungsgemäße Einsatz des drehzahlgeregelten Getriebes erlaubt es, unabhängig von der am Nebenabtrieb vorliegenden Drehzahl die Drehzahl für das Hilfsaggregat entsprechend einzustellen. Insbesondere ist eine konstante Drehzahl für das Hilfsaggregat wünschenswert, so dass dieses beispielsweise bei der Ausbildung als Generator entsprechend konstant betrieben werden kann und die entsprechenden konstanten elektrischen Kenngrößen ohne zusätzlichen Regelungsaufwand liefert. Auch beim Einsatz eines strömungstechnischen Hilfsaggregats kann durch das drehzahlgeregelte Getriebe erreicht werden, dass dieses entsprechend einfacher und effizienter ausgebildet werden kann, da auch hier auf entsprechende drehzahlvariable Hilfsaggregate oder eine entsprechende Überdimensionierung derselben verzichtet werden kann.

In dem drehzahlgeregelten Getriebe wird der Leistungsfluss auf wenigstens zwei Leistungszweige mit mindestens einem hydrodynamischen Kreislauf aufgeteilt. Das Getriebe umfasst hierzu ein Überlagerungsgetriebe, welches wenigstens mittelbar in Wirkverbindung zur Eingangswelle steht und den Leistungsfluss in einen ersten und einen zweiten Leistungszweig aufteilt. Der erste Leistungszweig ist dabei wenigstens mittelbar, insbesondere ausschließlich mechanisch mit der Ausgangswelle verbunden, die wiederum das Hilfsaggregat antreibt. Durch eine entsprechende Regelung beziehungsweise Steuerung des Leistungsflusses im zweiten Leistungszweig wird die Drehzahl der Ausgangswelle entsprechend geregelt, zum Beispiel konstant gehalten. Dazu umfasst der zweite Leistungszweig erfindungsgemäß wenigstens einen hydrodynamischen Wandler, der wiederum in mittelbarer Verbindung zum ersten Leistungszweig steht.

Diese mittelbare Verbindung wird bevorzugt wiederum im Überlagerungsgetriebe erreicht. Dadurch, dass der Leistungsfluss im zweiten Leistungszweig über den hydrodynamischen Wandler entsprechend beeinflusst werden kann, und dass dieser zweite Leistungszweig dann dem ersten Leistungszweig wieder überlagert wird, kann an der Ausgangswelle eine annähernd beliebige Drehzahl und ein annähernd beliebiges Drehmoment durch das erfindungsgemäße drehzahlgeregelte Getriebe eingestellt werden. Man kann den ersten Leistungszweig als rein mechanischen Leistungszweig und den zweiten Leistungszweig als hydrodynamischen Leistungszweig bezeichnen. Der Antrieb eines Nebenaggregats über das so gestaltete Getriebe kann also sehr flexibel erfolgen, was die Möglichkeit eines energieeffizienten und kosteneffizienten Einsatzes von entsprechenden Hilfsaggregaten mit minimaler Baugröße und minimalem Steuerungs- und Regelungsaufwand ermöglicht.

Weitere vorteilhafte Ausgestaltungen der Erfindung ergeben sich aus den Unteransprüchen sowie aus dem Ausführungsbeispiel, welches nachfolgen anhand der Figuren näher erläutert wird.

Dabei zeigen:
- Figur 1: einen schematisch angedeuteten Aufbau eines Antriebsstrangs gemäß der Erfindung;
- Figur 2: eine mögliche Ausgestaltung eines drehzahlgeregelten Getriebes gemäß der Erfindung: und
- Figur 3: eine mögliche Ausgestaltung der Erfindung mit einer hydrostatischen Speichereinheit als Hilfsaggregat.

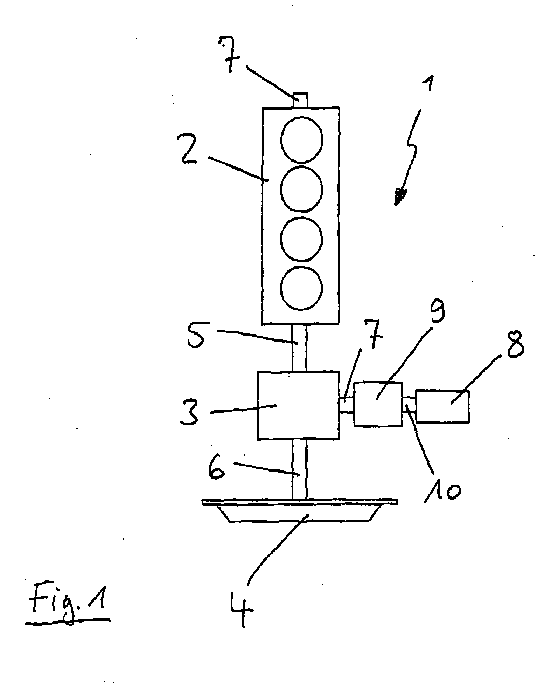

In Figur 1 ist nur beispielhaft ein Antriebsstrang 1 gemäß der Erfindung dargestellt. Dieser umfasst einen Verbrennungsmotor 2 sowie eine Getriebeeinheit 3, welche hier als Gangwechseigetriebe ausgebildet sein soll und zum Antrieb eines hier beispielhaft angedeuteten Rades 4, in diesem Fall dem Rad eines Schienenfahrzeugs, dient. Der Verbrennungsmotor 2 treibt dabei über seine Kurbelwelle eine Abtriebswelle 5 an, welche wiederum die Getriebeeinheit 3, beispielsweise ein hydrodynamisches Getriebe, antreibt. Vom Getriebeausgang erfolgt über eine weitere Welle 6 der Hauptabtrieb zu dem bereits angesprochenen angetriebenen Rad 4. Je nach Fahrzeug, in dem der Triebstrang 1 eingesetzt wird, kann dies auch eine andere Abtriebsmöglichkeit sein, beispielsweise eine Schraube oder ein Propeller oder ein entsprechendes Getriebe, welches über eine Achse die Leistung auf mehrere Räder aufteilt. Der Antriebsstrang 1 der Erfindung kann in verschiedenartigen Fahrzeugen wie beispielsweise Straßenfahrzeugen, Schienenfahrzeugen, Schiffen oder auch Luftfahrzeugen eingesetzt werden.

Der Antriebsstrang 1 weist außerdem, wie auch im Stand der Technik bekannt, Nebenabtriebe 7 auf. Im hier dargestellten Ausführungsbeispiel ist dies ein Nebenabtrieb 7 an der Getriebeeinheit 3 sowie ein zweiter Nebenabtrieb 7 direkt am Verbrennungsmotor 2. Der Nebenabtrieb 7 am Verbrennungsmotor 2 ist dabei als Motorausgang auf der der Abtriebswelle 5 entgegengesetzten Seite der Kurbelwelle des Motors 2 ausgebildet. Derartige Nebenabtriebe 7 sind bei Verbrennungsmotoren allgemein üblich und dienen typischerweise dem Antrieb von Lichtmaschinen oder Hilfspumpen beispielsweise für Motoröl oder Kühlwasser..

Beispielhaft soll in Figur 1 nur auf den Nebenabtrieb 7 an der Getriebeeinheit 3 näher eingegangen werden, das hierfür gesagte gilt jedoch analog auch für den Nebenabtriebe 7 am Verbrennungsmotor 2 oder für weitere Nebenabtriebe, welche in einem derartigen Antriebsstrang 1 vorhanden sein können, die in Figur 1 jedoch nicht dargestellt sind. Die Nebenabtriebe 7 dienen nun analog dem Stand der Technik zum Antreiben von den eingangs bereits genannten Hilfsaggregaten, beispielsweise mechanischen, strömungstechnischen oder elektrischen Hilfsaggregaten wie Generatoren, Lichtmaschinen, Kühlmittel- oder Ölpumpen, oder auch entsprechenden hydraulischen oder hydrostatischen Einheiten, wie beispielsweise verschleißfreie Dauerbremsen in Form eines Öl- oder Wasserretarders oder Einrichtung zur Rekuperation von Bremsenergie, zum Beispiel hydrostatische Speichereinheiten, auf welche später noch näher eingegangen wird.

In Figur 1 ist nun beispielhaft ein solches Hilfsaggregat 8 angedeutet. Wie bereits erwähnt, wird dieses über den Nebenabtrieb 7 an der Getriebeeinheit 3 angetrieben. Außerdem befindet sich nun ein drehzahlgeregeites Getriebe 9 zwischen dem Nebenabtrieb 7 und dem Hilfsaggragat 8. Dieses drehzahlgeregeite Getriebe 9, auf welches später noch näher eingegangen wird, ermöglicht es, dass die Drehzahl an einer Ausgangswelle 10 des drehzahlgeregelten Getriebes 9 entsprechend eingestellt, beispielsweise konstant gehalten werden kann. Damit steht unabhängig von der Drehzahl des Verbrennungsmotors eine beispielsweise fest vorgegebene Drehzahl im Bereich der Ausgangswelle 10 des drehzahlgeregelten Getriebes 9 zur Verfügung. Über diese fest vorgegebene Drehzahl kann dann unabhängig von der Drehzahl des Verbrennungsmotors 2 ein entsprechendes Hilfsaggregat 8 einfach und effizient angetrieben werden. So muss beispielsweise bei einem Generator keine nachfolgende Umrichtung der erzeugten Leistung auf die gewünschten elektrischen Kenngrößen erfolgen, sondern der Generator kann über die von der Ausgangswelle 10 gelieferte konstante Drehzahl direkt oder über eine feste Übersetzung mittelbar so betrieben werden, dass er die gewünschten elektrischen Kenngrößen ohne weiteren Regelungsaufwand zur Verfügung stellt.

Vergleichbares gilt auch bei entsprechenden Pumpen oder dergleichen, welche entweder deutlich einfacher und kleiner ausgelegt werden können, da über das drehzahlgeregelte Getriebe 9 auch eine Übersetzung ins Schnelle möglich ist, so dass bereits bei geringen Drehzahlen des Verbrennungsmotors 2 eine ausreichende Fördermenge realisiert werden kann. Andererseits können die Pumpen auch so ausgelegt werden, dass diese bei höheren Drehzahlen des Verbrennungsmotors 2 keinen unnötig großen Volumenstrom fördern und damit keine unnötige parasitäre Leistung verursachen.

Außerdem ermöglicht die regelbare und damit beispielsweise konstant gehaltene Drehzahl der Ausgangswelle 10 des drehzahlgeregelten Getriebes 9 den Einsatz von entsprechenden strömungstechnischen Maschinen, welche auf diese Drehzahl optimiert ausgelegt werden können, und welche dann als Konstantpumpen oder Konstantmotoren betrieben werden können und keine Regelung innerhalb der Maschine, beispielswelse durch ein variables Schluckvermögen, aufweisen müssen. Auch dies führt zu deutlich einfacheren und kostengünstigeren Maschinen und damit einem energieoptimierten und vereinfachten Gesamtaufbau.

Neben den beschriebenen Hilfsaggregaten 8 sind auch weitere Hilfsaggregate denkbar, beispielsweise eine verschleißfreie Dauerbremse in Form eines Öl- oder Wasserretarders. Auch dieser kann aufgrund der unabhängig von der Drehzahl am Nebenabtrieb 7 anliegenden Drehzahl über das drehzahlgeregelte Getriebe 9 mit einer konstanten oder annähernd konstanten Drehzahl betrieben werden. Dies erlaubt eine sehr einfache Auslegung desselben und ermöglicht damit ebenfalls einen sehr effizienten und hinsichtlich des Energiebedarfs optimierten Aufbau.

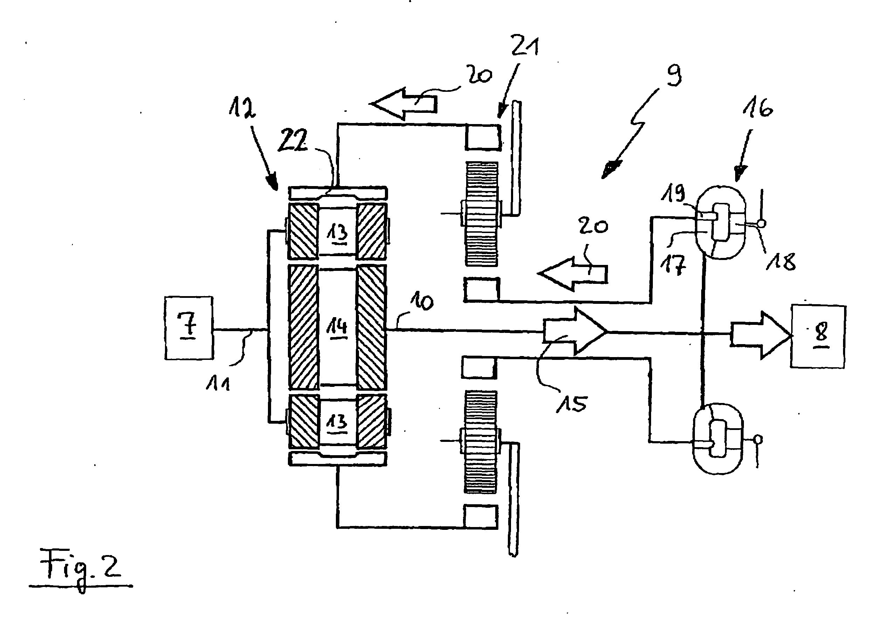

In Figur 2 ist nun der detaillierte Aufbau einer möglichen Ausführungsform des drehzahlgeregelten Getriebes 9 dargestellt. Das drehzahlgeregelte Getriebe 9 kann dabei unabhängig von dem jeweiligen Nebenabtrieb 7 an einem beliebigen Nebenabtrieb 7 betrieben werden, wie oben bereits ausgeführt wurde. In Figur 2 ist daher beispielhaft der Nebenabtrieb 7 als Kasten dargestellt, welcher entweder direkt mit einer Eingangswelle 11 des drehzahlgeregelten Getriebes 9 verbunden sein kann, oder welcher auch über eine feste Übersetzung mittelbar mit dieser Eingangswelle 11 verbunden sein kann. Von der Eingangswelle 11 gelangt die Leistung dann in ein Überlagerungsgetriebe 12, welches hier als Planetenradgetriebe ausgebildet ist, Die Eingangswelle 11 ist dabei mit den Planetenrädern 13 über einen Planetenradträger verbunden. Über das Sonnenrad 14 gelangt die Leistung dann über einen ersten Leistungszweig 15 unmittelbar über die Ausgangswelle 10 zu einem hier exemplarisch angedeuteten Hilfsaggregat 8. Die Ausgangswelle 10 steht außerdem mit einem hydrodynamischen Wandler 16 in Verbindung. Die Ausgangswelle 10 treibt dabei ein Pumpenrad 17 des hydrodynamischen Wandlers 16 entsprechend an. Über ein entsprechendes Leitrad 18 mit verstellbaren Schaufeln wird der Leistungsfluss gewandelt und stellt über ein Turbinenrad 19 einen entsprechenden Leistungsrückfluss, in einem zweiten Leistungszweig 20 bereit. Im hier dargestellten Ausführungsbeispiel wird der Leistungsrückfluss dabei über ein weiteres Getriebeelement in Form eines starren Planetenradsatzes 21 zurückgeführt. Der zweite Leistungsfluss 20 wirkt dabei auf ein Außenrad 22 des Überlagerungsgetriebes 12. Im Überlagerungsgetriebe 12 wird dann der zweite Leistungszweig 20 so mit dem ersten Leistungszweig 15 überlagert, dass durch eine entsprechende Einstellung des Leitrades 18 des Wandlers 16 an der Ausgangswelle 10 die gewünschte Drehzahl unabhängig von der sich ändernden Drehzahl im Bereich des Nebenabtriebs 7 eingestellt werden kann.

Der direkte Antrieb eines Hilfsaggregats 8 über die Ausgangswelle 10 des drehzahlgeregelten Getriebes 9, wie es in Figur 2 dargestellt ist, stellt dabei nicht die einzige Möglichkeit für den Antrieb eines Hilfsaggregats 8 dar. Selbstverständlich kann die Verbindung auch mittelbar über ein entsprechendes Getriebe, beispielsweise eine feste Übersetzung über ein Stirnradgetriebe, ein Riementrieb oder dergleichen erfolgen. Außerdem ist es denkbar, dass über die Ausgangswelle 10 des drehzahlgeregelten Getriebes 9 nicht nur ein Hilfsaggregat 8, sondern mehrere Hilfsaggregate 8 entsprechend angetrieben werden. Dies kann beispielsweise durch mehrere jeweils konstante Übersetzungen von der Ausgangswelle 10 zu den jeweiligen Hilfsaggregaten erfolgen. Beispielsweise könnten auf der Ausgangswelle 10 mehrere Riemenscheiben angeordnet sein, welche jede über einen eigenen Riemen beispielswelse einen Generator und eine Kühlwasserpumpe und eine Ölpumpe entsprechend antreiben.

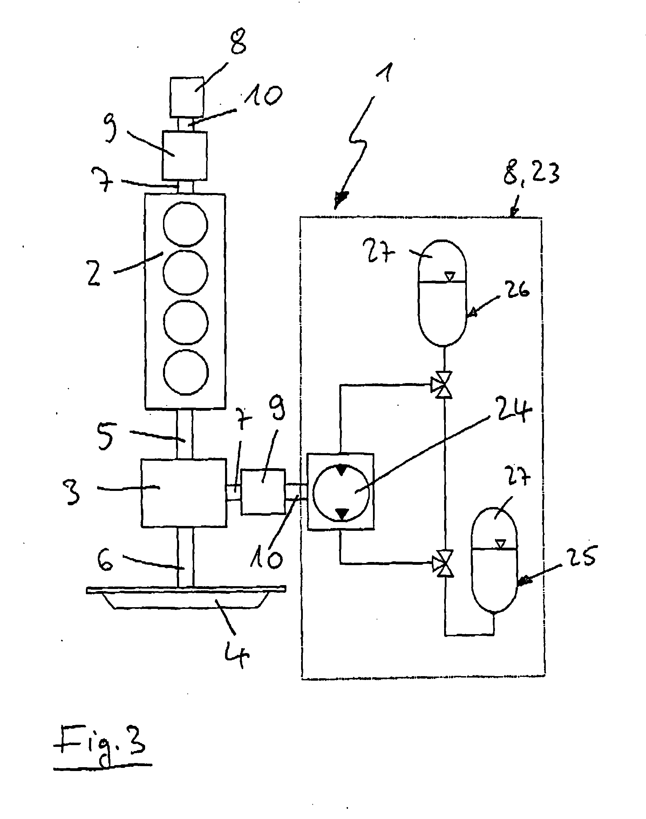

In Figur 3 ist nun ein weiteres Ausführungsbeispiel zu erkennen. Dabei sind in dem Ausführungsbeispiel gemäß Figur 3 zwei der Nebenabtriebe 7 dargestellt, wie dies bei Figur 1 auch schon erfolgt war. Im Gegensatz zu Figur 1 ist hier beispielhaft an beiden Nebenabtrieben ein entsprechendes Hilfsaggregat 8 angeschlossen. An dem Nebenabtrieb an dem Verbrennungsmotor 2 ist über das drehzahigeregelte Getriebe 9 ein Hilfsantrieb 9 angeschlossen, in diesem Beispielsfall ein elektrischer Generator. Dieser kann wie bereits beschrieben durch das drehzahlgeregeite Getriebe 9 optimal betrieben werden, da im Bereich der Ausgangswelle 10 eine konstante vorgegebene Drehzahl einstellbar ist.

Der Antriebsstrang 1 weist an einem anderen Nebenabtrieb 7, hier beispielhaft an der Getriebeeinheit 3, außerdem eine hydrostatische Speichereinheit 23 als Hilfsaggregat 8 auf. Die hydrostatische Speichereinheit 23 ist dabei durch eine strichpunktierte Linie umrandet. Diese stellt nach wie vor eines der möglichen Hilfsaggregate 8 dar. Die hydrostatische Speichereinheit, welche aus dem Stand der Technik prinzipiell bekannt ist, wird durch die Ausgangswelle 10 entsprechend mit dem drehzahlgeregelten Getriebe 9 sowie der Getriebeeinheit 3 gekoppelt.. Sinnvollerweise ist dabei, bevorzugt im Bereich des Nebenabtriebs 7, außerdem ein Kupplungselement vorgesehen, so dass die hydrostatische Speichereinheit 23 nur bei Bedarf in den Antriebsstrang 1 eingekoppelt werden kann, während diese ansonsten von dem Antriebsstrang 1 abgekoppelt bleibt. Der Betrieb der hydrostatischen Speichereinheit erfolgt damit nur dann, wenn diese auch benötigt wird, so dass diese insgesamt geschont und über eine längere Lebensdauer eingesetzt werden kann.

Die Funktionalität der hydrostatischen Speichereinheit 23 besteht nun darin, dass diese einerseits Leistung zur Verfügung stellt, um den Antriebsstrang in bestimmten Situationen mit Antriebsleistung zu unterstützen, beispielsweise um bei hohem Leistungsbedarf zusätzliche Leistung zur Verfügung zu stellen, oder um, ohne dass Leistung von dem Verbrennungsmotor 2 benötigt wird, das mit dem Antriebsstrang 1 versehene Fahrzeug emissionsfrel anfahren zu können. Die entsprechend bereitgestellte Leistung wird dabei durch im Bremsfall des Fahrzeugs anfallende Leistung erzeugt und in der hydrostatischen Speichereinheit 23 zwischengespeichert. Im Bremsfall muss dazu über den Nebenabtrieb 7 an der Getriebeeinheit 3 ein hydraulisches Aggregat 24 entsprechend betrieben werden. Das hydraulische Aggregat 24 wird dann im Pumpbetrieb arbeiten und fördert ein Arbeitsmedium aus einem Bereich mit einem niedrigeren Druck, beispielsweise eine Niederdruckspeichereinheit 25, über entsprechende Leitungen und Ventile In den Bereich einer Hochdruckspeichereinheit 26. Durch ein entsprechendes Steuern über Ventileinrichtungen wird dann nach Ende des Bremsbetriebs oder bei befüllter Hochdruckspeichereinheit 26 diese Energie in Form von Druck gespeichert. Dafür welsen beide Speichereinheiten jeweils Gaspolster 27 auf, welche durch ihre Kompressibilität einen entsprechenden Druck speichern können beziehungsweise im Bereich der Niederdruckspeichereinrichtung 25 einen Restdruck sicherstellen, auch wenn eine größere Menge an Arbeitsfluid aus der Niederdruckspeichereinrichtung 25 entnommen worden ist.

Wird nun im Antriebsfall Leistung benötigt, so kann die hydraulische Speichereinheit 23 diese aus dem Hochdruckspeicher 26 über das hydraulische Aggregat 24, welches dann im motorischen Betrieb betrieben wird, zur Verfügung stellen. Diese Leistung kann entweder alternativ oder ergänzend zur Leistung des Verbrennungsmotors 2 bereitgestellt werden,

Dieser Aufbau ist an sich soweit bekannt. Durch die Anbindung an einen Nebenabtrieb 7 über das drehzahlgeregelte Getriebe 9 kann der Aufbau nun entsprechend vereinfacht werden, da das hydraulische Aggregat 26 als Konstantaggregat ausgebildet werden kann, weil im Bereich der Ausgangswelle 10 des drehzahlgeregelten Getriebes eine entsprechend konstante Drehzahl eingestellt werden kann. Im Pumpbetrieb des hydraulischen Aggregats 24 treibt die Ausgangswelle 10 mit konstanter Drehzahl das hydraulische Aggregat 24 an und sorgt somit für ein Einspeichern der Energie aus dem angetriebenen Rad 4 und die Getriebeeinheit 3 bereitgestellte Bremsenergie. Die hydraulische Speichereinheit dient damit zum verschleißfreien Abbremsen des mit dem Antriebsstrang 1 ausgestatteten Fahrzeugs. Gegebenenfalls können herkömmliche Bremselemente in Form von Scheibenbremsen oder dergleichen in jedem Fall zusätzlich vorgesehen sein; auch die Unterstützung durch eine verschleißfreie Dauerbremse in Form eines Retarders kann gegebenenfalls sinnvoll sein, um in bestimmten Leistungsbereichen die Bremsielstung zu erhöhen.

Im Antriebsfall wird über das hydraulische Aggregat 24 als Motor entsprechend Leistung bereitgestellt, welche dann "rückwärts" durch das drehzahlgeregelte Getriebe 9 läuft. Auch hierbei kann durch den Einsatz eines zweiten Leistungszweigs 20 über den Wandler 16 eine entsprechende Regelung erfolgen, sofern dies erforderlich ist. Sollte dies nicht erforderlich oder nicht gewünscht sein, kann durch eine entsprechende Einstellung der Leitschaufeln und/oder ein Entleeren des hydrodynamischen Wandlers 16 dies auch vermieden werden.

Alternativ zu diesem hier dargestellten sogenannten "geschlossenen" System der hydraulischen Speichereinheit 23 wäre auch ein sogenanntes offenes System denkbar, bei dem der Niederdruckspeicher 25 gegenüber der Umgebung offen wäre, also auf Atmosphärendruckniveau liegt. Um die hydrostatische Speichereinheit dann effektiv betreiben zu können, kann eine entsprechende Einrichtung zur Erzeugung eines Vordrucks vorgesehen werden, um das Druckniveau in dem Hochdruckspeicher 26 nicht ausschließlich über das hydraulische Aggregat 24 erreichen zu müssen. Dadurch kann das hydraulische Aggregat für den Pumpfall entsprechend kleiner dimensioniert werden. Ihm steht für den motorischen Betrieb jedoch das gesamte Druckgefälle zwischen dem Druck des Hochdruckspeichers 26 und dem Atmosphärendruck zur Verfügung. Eine solche Vordruckeinheit ist im hier dargestellten Ausführungsbeispiel nicht dargestellt. Sie würde aus einem offenen Tank anstelle der Niederdruckspeichereinheit 25 bestehen, aus welchem über entsprechende Lademotoren ein Vordruck in den Bereich des dann als Pumpe betriebenen hydraulischen Aggregats 24 geliefert wird. Der Antrieb dieser Ladepumpen kann beispielsweise durch dieselbe Welle, hier also die Ausgangewelle 10, wie der des hydraulischen Aggregats erfolgen, so dass der Vordruck nur dann bereitgestellt wird, wenn er zum Betrieb des hydraulischen Aggregats als Pumpe auch benötigt wird. Dementsprechend kann für diesen Fall eine Kupplung vorgesehen sein, um die Ladepumpen dann abzukoppein, wenn das hydraulische Aggregat 24 im Motorbetrieb betrieben wird und Leistung für den Antriebsstrang bereitstellt. Auch wäre es möglich, die Ladepumpen antriebsseltig ein- und auszuschalten.

Eine Alternative wäre hier der Antrieb einer Regelpumpe, welche beispielsweise zusammen mit dem hydraulischen Aggregat 24 auf der Ausgangswelle 10 sitzen kann. Diese Regelpumpe mit einem variablen Schluckvermögen könnte dann entsprechend hydraulische Lademotoren, welche als Konstantmotoren ausgebildet werden können, antreiben, welche dann wiederum die Ladepumpen antreiben. Dieser Aufbau ermöglicht eine hohe Flexibilität bei der baulichen Anordnung, da die beiden Einheiten ledlglich über hydraulische Leitungen miteinander verbunden werden müssen. Durch ein entsprechendes Einstellen der Regelpumpe auf "Null" in den Fällen, in denen das hydraulische Aggregat 24 Leistung zum Antriebsstrang liefert, kann dann bei dieser Ausführungsform auf eine Kupplung verzichtet werden.

Alles in allem erlaubt der Antrieb von Hilfsaggregaten 8 jedweder Art über ein entsprechendes drehzahlgeregeltes Getriebe 9 in der Ausgestaltung gemäß der Erfindung entscheidende Vorteile hinsichtlich der Energieeffizienz des Antriebsstrangs 1 sowie einer effektiven, verschleißarmen und kostengünstigen Auslegung der benötigten Hilfsaggregate 8 für ein Fahrzeug mit einem derartigen Antriebsstrang 1.

## Patentansprüche

1. Antriebsstrang in einem Fahrzeug mit:
1.1 wenigstens einem Verbrennungsmotor (2);
1.2 wenigstens einer Getriebseinheit (3), insbesondere einem Gangwechseigetriebe;
1.3 wenigstens einem Nebenabtrieb (7) zum Antreiben wenigstens eines Hilfsaggregats (8);
**dadurch gekennzeichnet, dass**
1.4 das wenigstens eine Hilfsaggregat (8) mit dem wenigstens einen Nebenabtrieb (7) über ein drehzahlgeregeites Getriebe (9) verbunden ist, mit:
1.5 einer Eingangswelle (11), die wenigstens mittelbar mit dem Nebenabtrieb (7) verbunden ist;
1.6 einer Ausgangswelle (10), die wenigstens mittelbar mit dem Hilfsaggregat (8) verbunden ist;
1.7 einem Überlagerungsgetriebe (12), das wenigstens mittelbar mit der Eingangswelle (11) verbunden ist, und welches Leistung auf einen ersten Leistungszweig (15), der wenigstens mittelbar mit der Ausgangswelle (10) verbunden ist, und einen zweiten Leistungszweig (20) aufteilt;
1.8 der zweite Leistungszweig (20) umfasst wenigstens einen hydrodynamischen Wandler (16), der in wenigstens mittelbarer Verbindung zum ersten Leistungszweig (15) steht.

2. Antriebsstrang nach Anspruch 1, **dadurch gekennzeichnet, dass** ein Pumpenrad (17) des hydrodynamischen Wandlers (16) wenigstens mittelbar mit dem ersten Leistungszweig (15) und das Turbinenrad (19) des hydrodynamischen Wandlers (16) wenigstens mittelbar mit dem zweiten Leistungszweig (20) verbunden sind.

3. Antriebsstrang nach einem der Ansprüche 1 oder 2, **dadurch gekennzeichnet, dass** die Leistung an der Ausgangswelle (10) des drehzahlgeragelten Getriebes (9) auf mehrere Hilfsaggregate (8) aufgeteilt ist.

4. Antriebsstrang nach Anspruch 3, **dadurch gekennzeichnet, dass** die Aufteilung der Leistung über Getriebeelemente mit konstanter, vorgegebener Drehzahl erfolgt.

5. Antriebsstrang nach einem der Ansprüche 1 bis 4, **dadurch gekennzeichnet, dass** der wenigstens eine Nebenabtrieb (7) als Nebenabtrieb an der wenigstens einen Getriebeeinheit (3) ausgebildet ist.

6. Antriebsstrang nach einem der Ansprüche 1 bis 5, **dadurch gekennzeichnet, dass** der wenigstens eine Nebenabtrieb (7) als Nebenabtrieb an dem wenigstens einen Verbrennungsmotor (2) ausgebildet ist.

7. Antriebsstrang nach einem der Ansprüche 1 bis 5, **dadurch gekennzeichnet, dass** wenigstens eines der Hilfsaggregate (8) als eine elektrische Maschine, insbesondere als elektrischer Generator, ausgebildet ist.

8. Antriebsstrang nach einem der Ansprüche 1 bis 7, **dadurch gekennzeichnet, dass** wenigstens eines der Hilfsaggregate (8) eine Pumpe ist

9. Antriebsstrang nach einem der Ansprüche 1 bis 8, **dadurch gekennzeichnet, dass** wenigstens eines der Hilfsaggregate (8) eine Strömungsmaschine ist.

10. Antriebsstrang nach einem der Ansprüche 1 bis 9, **dadurch gekennzeichnet, dass** wenigstens eines der Hilfsaggregate (8) ein Retarder ist.

11. Antriebsstrang nach einem der Ansprüche 1 bis 10, **dadurch gekennzeichnet, dass** wenigstens eines der Hilfsaggregate (8) eine hydrostatische Speichereinheit (23) ist.

12. Antriebsstrang nach Anspruch 11, **dadurch gekennzeichnet, dass** die hydrostatische Speichereinheit (23) ein Speicherelement (26) zum Speichern von Druckenergie umfasst, welches so mit einem hydraulischen Aggregat (24) verbunden ist, dass das Speicherelement (26) im Bremsfall durch Pumpbetrieb des hydraulischen Aggregats (24) befüllbar ist, und im Antriebsfall im Motorbetrieb des hydraulischen Aggregats (24) dieses durch Druck aus dem Speicherelement (26) antreibbar ist.

13. Antriebsstrang nach einem der Ansprüche 11 oder 12, **dadurch gekennzeichnet, dass** die hydrostatische Speichereinheit (23) einen Hochdruckbereich (26) und einen Bereich mit niedrigerem Druck (25) aufweist, wobei das hydraulische Aggregat (24) zwischen den Druckniveaus dieser beiden Bereiche (25, 26) arbeitet.

14. Antriebsstrang nach Anspruch 13, **dadurch gekennzeichnet, dass** der Bereich mit niedrigerem Druck einen gegenüber der Atmosphäre offenen Tank und eine Einrichtung zur Erzeugung eines Vordrucks für den Pumpbetrieb des hydraulischen Aggregats (24) aufweist,

15. Antriebsstrang nach Anspruch 14, **dadurch gekennzeichnet, dass** die Einrichtung zur Erzeugung des Vordrucks wenigstens eine von derselben Welle (10) wie das hydraulische Aggregat (24) angetriebene Ladepumpe aufweist,

16. Antriebsstrang nach Anspruch 14, **dadurch gekennzeichnet, dass** die Einrichtung zur Erzeugung des Vordrucks wenigstens eine von derselben Welle wie das hydraulische Aggregat (24) angetriebene Regelpumpe aufweist, wobei die Regelpumpe durch den von ihr erzeugten Druck wenigstens einen hydraulischen Lademotor antreibt, welcher wiederum wenigstens eine Ladepumpe antreibt.

17. Antriebsstrang nach Anspruch 15 oder 16, **dadurch gekennzeichnet, dass** die wenigstens eine Ladepumpe in dem offenen Tank angeordnet ist.

## Claims

1. A drive train in a vehicle with:
1.1 at least one combustion engine (2);
1.2 at least one transmission unit (3), in particular one gear shift transmission;
1.3 at least one auxiliary drive (7) for driving at least one auxiliary unit (8);
**characterised in that**
1.4 the at least one auxiliary unit (8) is connected to the at least one auxiliary drive (7) via a rotational speed-controlled transmission (9), with;
1.5 one input shaft (11), which is connected at least indirectly to the auxiliary drive (7);
1.6 one output shaft (10), which is connected at least indirectly to the auxiliary unit (8);
1.7 one superimposed transmission (12), which is connected at least indirectly to the input shaft (11), and which apportions power on a first power branch (15), which is connected at least indirectly to the output shaft (10), and a second power branch (20);
1.8 the second power branch (20) includes at least one hydrodynamic converter (16), which is connected at least indirectly to the first power branch (15).

2. A drive train according to claim 1, **characterised in that** a pump wheel (17) of the hydrodynamic converter (16) is connected at least indirectly to the first power branch (15) and that the turbine wheel (19) of the hydrodynamic converter (16) is connected at least indirectly to the second power branch (20).

3. A drive train according to one of the claims 1 or 2, **characterised in that** the power at the output shaft (10) of the speed-controlled transmission (9) is apportioned on several auxiliary units (8).

4. A drive train according to claim 3, **characterised in that** the distribution of the power involves transmission elements with constant, preset rotation speed.

5. A drive train according to one of the claims 1 to 4, **characterised in that** the at least one auxiliary drive (7) is designed as an auxiliary drive on the at least one transmission unit (3).

6. A drive train according to one of the claims 1 to 5, **characterised in that** the at least one auxiliary drive (7) is designed as an auxiliary drive on the at least one combustion engine (2).

7. A drive train according to one of the claims 1 to 5, **characterised in that** at least one of the auxiliary units (8) is designed as an electrical machine, in particular an electrical generator.

8. A drive train according to one of the claims 1 to 7, **characterised in that** at least one of the auxiliary units (8) is a pump.

9. A drive train according to one of the claims 1 to 8, **characterised in that** at least one of the auxiliary units (8) is a continuous flow machine.

10. A drive train according to one of the claims 1 to 9, **characterised in that** at least one of the auxiliary units (8) is a retarder.

11. A drive train according to one of the claims 1 to 10, **characterised in that** at least one of the auxiliary units (8) is a hydrostatic memory unit (23).

12. A drive train according to claim 11, **characterised in that** the hydrostatic memory unit (23) includes a storage element (26) for storing kinetic energy which is connected to a hydraulic unit (24) in such a way that the storage element (26) can be filled when braking by operating the pump of the hydraulic unit (24), and said element can be driven by the pressure from the storage element (26) when driving the engine of the hydraulic unit (24).

13. A drive train according to one of the claims 11 or 12, **characterised in that** the hydrostatic storage unit (23) exhibits a high-pressure range (26) and a region with low pressure (25), wherein the hydraulic unit (24) works between the pressure levels of both these regions (25, 26).

14. A drive train according to claim 13, **characterised in that** the region with low pressure includes a tank open with respect to the atmosphere and a device for generating an upstream pressure for the pump operation of the hydraulic unit (24).

15. A drive train according to claim 14, **characterised in that** the device for generating of the upstream pressure exhibits at least one charging pump driven by the same shaft (10) as the hydraulic unit (24).

16. A drive train according to claim 14, **characterised in that** the device for generating of the upstream pressure exhibits at least one control pump driven by the same shaft (10) as the hydraulic unit (24), wherein the control pump drives at least one hydraulic charging engine through the pressure generated by said pump, which engine drives in turn at least one charging pump.

17. A drive train according to claim 15 or 16, **characterised in that** the at least one charging pump is arranged in the open tank.

## Revendications

1. Train d'entraînement dans un véhicule avec:
1.1 au moins un moteur à combustion (2);
1.2 au moins une unité de transmission (3), en particulier une transmission à changement de vitesse ;
1.3 au moins un entraînement auxiliaire (7) pour entraîner au moins une unité auxiliaire (8);
**caractérisé en ce que**
1.4 ladite au moins une unité auxiliaire (8) est solidaire dudit au moins un entraînement auxiliaire (7) par le biais d'une transmission (9) à vitesse de rotation variable, avec:
1.5 un arbre d'entrée (11), qui est solidaire au moins indirectement de l'entraînement auxiliaire (7);
1.6 un arbre de sortie (10), qui est solidaire au moins indirectement de l'unité auxiliaire (8);
1.7 une transmission à superposition (12), qui est solidaire au moins indirectement de l'arbre d'entrée (11), et qui répartit la puissance sur une première branche de puissance (15) qui est solidaire au moins indirectement de l'arbre de sortie (10) et sur une deuxième branche de puissance (20);
1.8 la seconde branche de puissance (20) comprend au moins un convertisseur hydrodynamique (16), qui est au moins indirectement solidaire de la première branche de puissance (15).

2. Train d'entraînement selon la revendication 1 **caractérisé en ce qu'**une roue de pompe (17) du convertisseur hydrodynamique (16) est solidaire moins indirectement de la première branche de puissance (15) et la roue de turbine (19) du convertisseur hydrodynamique (16) est solidaire au moins indirectement de la seconde branche de puissance (20).

3. Train d'entraînement selon l'une des revendications 1 ou 2, **caractérisé en ce que** que la puissance au niveau de l'arbre de sortie (10) de la transmission (9) à vitesse variable est répartie sur plusieurs unités auxiliaires (8).

4. Train d'entraînement selon la revendication 3 **caractérisé en ce que** la puissance est répartie sur les éléments d'engrenage avec une vitesse de rotation constante et prédéterminée.

5. Train d'entraînement selon l'une des revendications 1 à 4, **caractérisé en ce que** ledit au moins un entraînement auxiliaire (7) est conçu comme entraînement auxiliaire au niveau de ladite au moins une unité de transmission (3).

6. Train d'entraînement selon l'une des revendication 1 à 5, **caractérisé en ce que** ledit au moins un entraînement auxiliaire (7) est conçu comme entraînement auxiliaire au niveau dudit au moins un moteur à combustion (2),

7. Train d'entraînement selon l'une des revendications 1 à 5, **caractérisé en ce qu'**au moins l'une des unités auxiliaires (8) est conçue comme machine électrique, en particulier comme générateur électrique.

8. Train d'entraînement selon l'une des revendications 1 à 7, **caractérisé en ce qu'**au moins l'une des unités auxiliaires (8) est une pompe.

9. Train d'entraînement selon l'une des revendications 1 à 8, **caractérisé en ce qu'**au moins l'une des unités auxiliaires (8) est une machine à courant continu.

10. Train d'entraînement selon l'une des revendications 1 à 9, **caractérisé en ce qu'**au moins l'une des unités auxiliaires (8) est un retardateur.

11. Train d'entraînement selon l'une des revendications 1 à 10, **caractérisé en ce qu'**au moins l'une des unités auxiliaires (8) est une unité de stockage hydrostatique (23).

12. Train d'entraînement selon la revendication 11, **caractérisé en ce que** l'unité de stockage hydrostatique (23) comprend un élément de stockage (26) destiné au stockage d'énergie cinétique, qui est solidaire d'une unité hydraulique (24) de telle sorte que l'élément de stockage (26) peut être rempli en cas de freinage par actionnement de la pompe de l'unité hydraulique (24), et que cet élément peut être entraîné par la pression provenant de l'élément de stockage (26) avec le moteur en service de l'unité hydraulique (24) en mode entraînement.

13. Train d'entraînement selon l'une des revendications 11 ou 12, **caractérisé en ce que** que l'unité de stockage hydrostatique (23) présente une zone haute pression (26) et une zone de basse pression (25), tandis que l'unité hydraulique (24) fonctionne entre les niveaux de pression de ces deux zones (25, 26).

14. Train d'entraînement selon la revendication 13, **caractérisé en ce que** la zone de basse pression présente un réservoir ouvert à l'atmosphère et un dispositif permettant de générer une pression amont pour le fonctionnement de la pompe de l'unité hydraulique (24).

15. Train d'entraînement selon la revendication 14, **caractérisé en ceque** le dispositif permettant de générer la pression amont présente au moins une pompe de charge entraînée par le même arbre (10) que l'unité hydraulique (24).

16. Train d'entraînement selon la revendication 14, **caractérisé en ce que** le dispositif permettant de générer la pression amont présente au moins une pompe de régulation entraînée par le même arbre (10) que l'unité hydraulique (24), tandis que la pompe de régulation entraîne au moins un moteur de charge hydraulique par la pression qu'elle génère, qui à son tour entraîne au moins une pompe de charge.

17. Train d'entraînement selon la revendication 15 ou 16, **caractérisé en ce que** ladite au moins une pompe de charge est disposée dans le réservoir ouverte.
